# EUROPEAN PATENT SPECIFICATION

(11) **EP 1 724 419 B1**
(45) Date of publication and mention of the grant of the patent: **07.05.2008**
(21) Application number: 05380222.9
(22) Date of filing: 11.10.2005
(51) Int. Cl.: E05B 53/00

(54) **Transmission device between the handle and the lock of a vehicle door**
Kabelvorrichtung zwischen dem Griff und das Schloss einer Fahrzeugtür
Dispositif de transmission entre une poignée et une serrure d'une portière de véhicule

(30) Priority: 30.12.2004 ES 200402941 U
(43) Date of publication of application: 22.11.2006
(73) Proprietor: Seat, S.A., 08040 Barcelona (ES)
(72) Inventor: Coleti I Gali, Joan, 08760 Martorell Barcelona (ES); Nonay Rapp, Esteban, 08760 Martorell Barcelona (ES); Grisaleña Giménez, Juan, 08760 Martorell Barcelona (ES)
(74) Representative: Carvajal y Urquijo, Isabel

(56) References cited:
- EP-A1- 0 304 357
- FR-A- 1 240 022
- FR-A1- 2 763 983
- US-A1- 2001 019 118

## Description

The present patent refers to a transmission device between the handle and the lock of a door of a vehicle, made up of a sheathed cable which is connected at one end to the handle and at the opposite end to the lock and which serves as a transmission means between said handle and the actuating element of the catch in order carry out the opening thereof from said handle.

The opening system of the door of a vehicle generally consists of three differentiated parts, the door handle, the lock mechanism, and a transmission element between the two.

Traditionally, the transmission element consists of a metal rod which, due to its rigidity, allows transmitting the movement from the door handle directly to the lock mechanism (see for example document FR-A-2 763 983). This concept does not present any problem as regards its normal operation.

The drawback in the use of the rigid rod lies in the circumstance that when the vehicle suffers a side impact on the door, the rod strains uncontrollably, possibly causing the actuation of the lock mechanism, starting the uncontrolled opening thereof and therefore a considerable safety loss.

Due to this circumstance the substitution of the rigid rod with a flexible cable is already known, circumstance which prevents the drawbacks set forth, although there might exist deformation of the door by a side impact thereupon. In this case, the transmission device is made up of a metal cable that is pulled with the actuation of the door handle and is covered by a cylindrical sheath generally made up in the shape of a spiral, with the property that in its maximum straining state it forms an arc with a considerable radius, preventing the metal cable which is protected by the sheath from suffering the effects of an excessive straining, which would cause, as the rigid rod, the opening of the door.

However, the opening devices made up of a sheathed cable may cause problems in their operation, derived from the inner friction between the cable and the sheath. This circumstance becomes evident in models in which, due to the relative position between the handle and the door lock mechanism, the cable must describe different types of curves.

In order to prevent the excessive curvatures that the cable adopts, the position or actuation of the lock mechanism is inverted in the device of the invention via the cable. However, as the metal cable cannot actuate the lock catch, given that it cannot work by compression, it is the sheath of said cable, once it is fixed to the catch actuating mechanism and guided by the tightened metal cable, which actuates said lock opening mechanism or device.

According to the present invention, the arrangement described is achieved by means of elements for anchoring the end of the sheath to the lock catch actuating mechanism and by means of an element for anchoring the end of the cable to a fixed point of the lock, with the cable duly tightened and such that this point fixed to the lock of the cable is located at a distance from the handle greater than the anchoring point of the sheath.

With this arrangement, it will be the cable which will act as a guiding element and the sheath thereof which will act as a transmission element from the handle to the lock catch actuating mechanism.

The anchoring element between the sheath and the catch actuating mechanism is made up of a bushing through which the cable passes, with free sliding capacity with respect thereto, and to which the free end of the sheath is fixed. The bushing and the catch actuating mechanism are provided with position-adjustable mutual anchoring means, which will allow selecting the fixing position between the sheath and the catch actuating mechanism.

As regards the anchoring device between the cable and the fixed point of the lock, it comprises a head which can be fixed to the end of the cable and an integral retention casing of the lock, the head and casing having mutual fitting means which will prevent the head from shifting.

The bushing which serves as an anchoring element between the sheath and the catch actuating mechanism may include two sections of different inner and outer diameter, one of a greater diameter in which the sheath is introduced and fixed, and the other of a smaller diameter through which the cable passes freely.

The catch actuating mechanism may have a cylindrical housing configured and sized in order to allow the coupling of the aforementioned bushing. With this makeup, the smaller diameter section of the bushing may have an outer peripheral threading or ribbing, and for its part the cylindrical housing of the catch actuating mechanism may have the same peripheral threading or ribbing. The smaller diameter section of the bushing which is threaded or ribbed is coupled and fixed inside the housing in relatively selectable positions. To this end, the smaller diameter section of the bushing will be peripherally threaded or ribbed on the outside for a greater length than the threading or ribbing of the cylindrical housing. Furthermore, this housing will be longitudinally subdivided in two halves, one of which is shaped on the catch actuating element itself and the other on a cover which can be fixed to the first half and which for example can be articulated thereto. With this makeup, in order to fix the bushing, the cover of the housing is opened, the threaded portion of the bushing is coupled on the half of the housing fixed to the cover, in the selected position, and said cover is closed such that the bushing is retained without the possibility of longitudinal movement.

As regards the head which can be fixed to the end of the cable, which may be made from plastic material, it has a central passage through which the cable is introduced until a portion to which a terminal which serves as a stop against the extraction of said cable with respect to the head is fixed projects. The head further includes an outer transverse clamp limited to one and the other side between shapings. For its part, the integral casing of the lock also has shapings complementary to those of the head, for allowing the tight coupling therein of the clamp and shapings of said head, assuring its immobility.

In the device of the invention, the bushing which constitutes the fixing element of the sheath will be of a metallic nature and serves as a guiding element of the cable. The threaded section of the bushing of greater length than the housing where it is assembled allows fixing the sheath in different positions, such that the correct operating distance is achieved, regardless of the manufacturing tolerances of the cable and the relative positioning tolerance of the cam of the lock. An optimal assembly is thus achieved, given that at the time of clipping the threaded bushing the cable is slightly tight, such that the tolerances are absorbed.

The final result is that upon actuation of the door handle with the hand, all the movement is transmitted directly to the lock, through the sheath of the cable, and therefore the usual run loss in this type of mechanisms caused by the distension of the cable does not exist. That is, a prior actuating run for the cable to be tightened and the movement to start being transmitted is not required in the mechanism of the invention. Furthermore, in comparison with traditional assembly and tightening systems, the system of the invention does not require a second tightening operation after assembly.

With all this, smaller actuating stresses are achieved, as well as the actuating runs being reduced in the same manner.

The main advantage of the invention lies in that, by means of anchoring elements of simple makeup, a valid solution to an existing problem in the opening system of the door of vehicle models in which a conventional configuration cannot be adopted, either due to the relative position between its handle and its lock mechanism or due to the design of the handle. The fixing of the transmission device of the invention also allows to take advantage of the same lock mechanism for all models, given that the integral casing of the lock in which the head which can be fixed is fixed to the end of the cable may consist of the U-shaped opening which is used in traditional mechanisms for fixing the cable sheath.

The features and advantages of the device of the invention will be better understood with the following description, made in reference to the attached drawings, in which a non-limiting embodiment is shown.

In the drawings:
Figure 1 shows a plan view of the lock mechanism with the transmission device of the invention connected.
Figure 2 shows a perspective view of the transmission device.
Figure 3 shows view similar to that of Figure 2, showing the end for connecting the cable to the lock.
Figure 4 shows a side elevational view of the bushing serving as an anchoring means between the sheath and the lock catch actuating mechanism.
Figure 5 shows a longitudinal section of the same bushing, taken along the section line V-V of Figure 4, including the cable making up the transmission device.
Figure 6 shows a perspective view of a possible embodiment of the cylindrical housing in which the bushing which serves as an anchoring element is coupled between the sheath and the lock catch actuating mechanism.
Figure 7 shows a perspective view of the head serving as an element for anchoring the cable to the lock.
Figure 8 shows a longitudinal section of the same head, taken along the section line VIII-VIII of Figure 7.
Figure 9 shows a perspective view of the casing in which the head of Figures 7 and 8 is coupled and anchored.
Figure 10 shows a partial cross section of the same casing, taken along section line X-X of Figure 9, including the head of Figures 7 and 8.

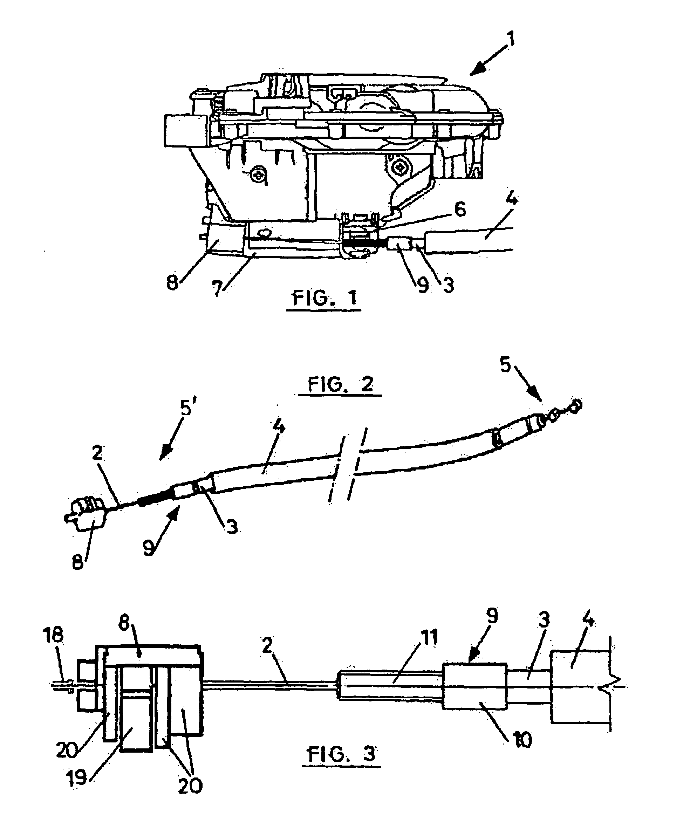

The mechanism 1 of a lock which is assembled on the door of an motor vehicle is generally shown in Figure 1, the actuation of which, from the door handle, is carried out through a cable which, as can be better observed in Figure 2, includes a metal core 2, for example consisting of braided wires, a protective sheath 3, which may be of the type of a helically wound wire, and an anti-noise foam coating 4. This cable is connected to the door handle at the end referenced with number 5, whereas it is connected to the lock at the end referenced with number 5'. To this end, this connection to the lock is carried out by means of anchoring the end of sheath 3 to the lock catch actuating mechanism 6 and by means of anchoring the end of cable core 2 to a fixed point or area 7 of the lock.

Fixing the end of cable core 2 to the fixed point 7 of the lock is carried out by means of a head 8 which may be made of plastic material. For its part, the fixing of sheath 3 to the catch actuating mechanism 6 is carried out by means of a bushing 9, preferably of a metallic nature, as can be better observed in Figure 3.

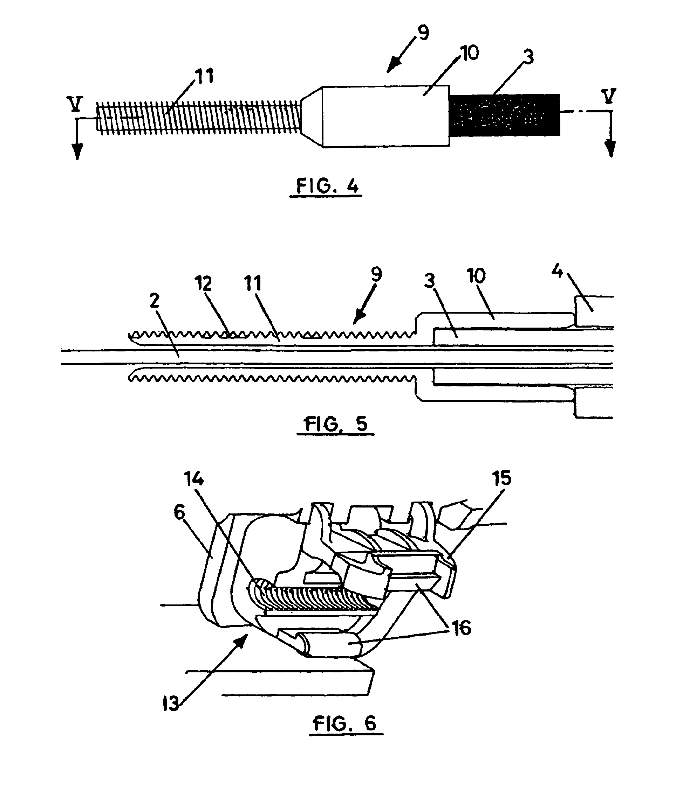

The bushing 9, as is represented in Figures 4 and 5, includes two sections of different outer and inner diameter: a greater diameter section 10, in which the cable sheath 3 is introduced and fixed and which the anti-noise foam coating 4 will abut, and a smaller diameter section 11, which will be provided with an outer peripheral threading or ribbing 12 and through which cable core 2 will freely pass, such that it can slide longitudinally with respect to the bushing 9.

For its part, the lock catch actuating mechanism 6 has a housing 13 which may be longitudinally subdivided in two halves, one of which, which is referenced with number 14, is shaped on the catch actuating mechanism 6 itself, whereas the other half, which is referenced with number 15, is configured like a cover, which may for example be articulated to the element 6 and has clipping or closing means 16 in order to assure the closing position of this cover over the half 14. The inner surface of the housing 13, defined by half 14 and cover 15, has its inner surface peripherally threaded or ribbed in a manner coinciding with the peripheral ribbing or threading 12 of section 11 of bushing 9.

With this makeup, once the sheath 3 is fixed to section 10 of bushing 9, the section 11 of this bushing is coupled on half 14 of housing 13, the desired position being axially selected, cover 15 being closed next, such that the bushing is thus retained in housing 13, without the possibility of axial shifting with respect thereto. With this it is thus achieved that sheath 3 is anchored to the catch actuating mechanism 6, whereas cable core 2 can slide freely therethrough.

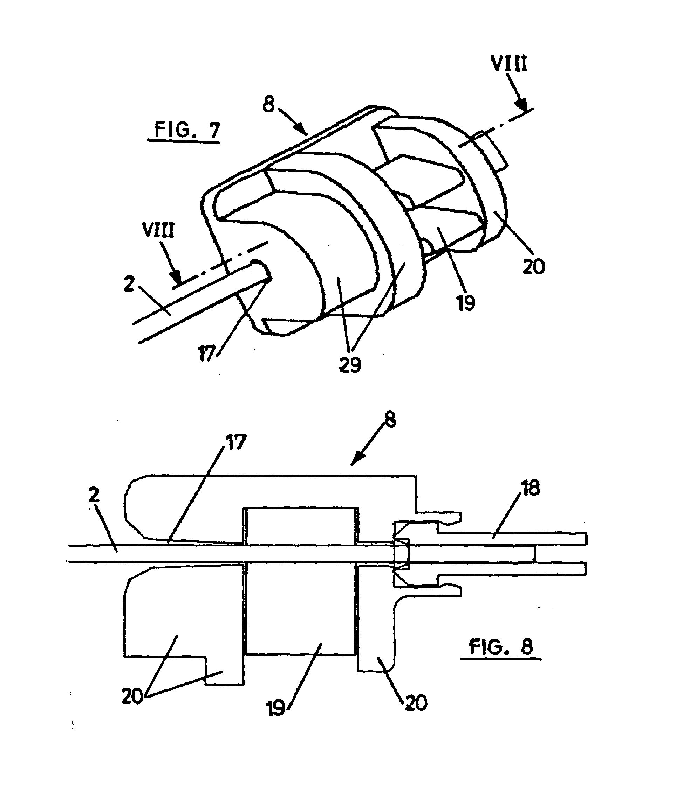

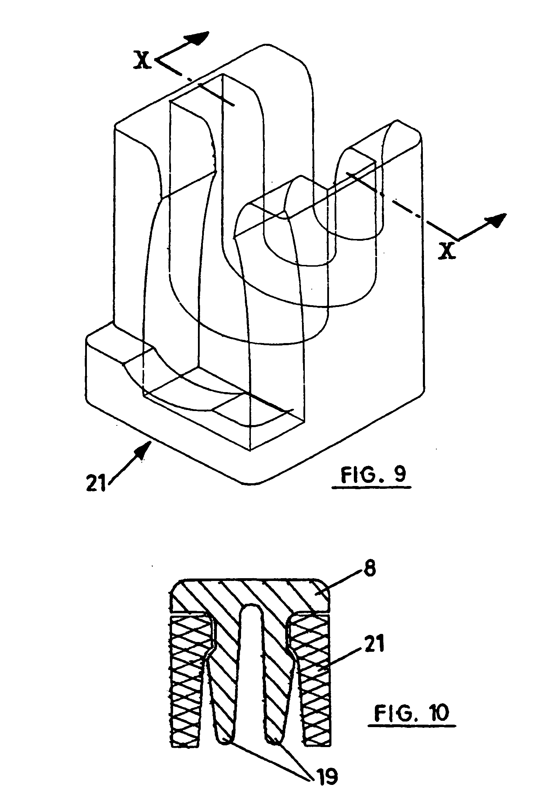

As already indicated, the end of cable core 2 is anchored to a fixed point or area 7 of the lock by means of head 8 which, as can be observed in Figures 7 and 8, has an axial passage 17 through which cable core 2 is introduced and passed, projecting from the opposite end in a portion to which a terminal 18 is fixed, Figure 8, serving as a stop against the extraction of said core. Outwardly, head 8 shapes a central clamp 19 and end shapings 20, one and the other which can be coupled in a casing 21, Figures 9 and 10, forming part of the lock 7 itself and adopting a U shape, with internal shapings complementary to those of head 8, such that once the end of the cable is anchored as shown in Figure 8, the head can be assembled on casing 21 and be retained by the same.

The introduction of clamp 19 in casing 21 will prevent its accidental extraction from said casing, and the end shapings 20 will prevent the longitudinal sliding of head 8 with respect to casing 21.

The threaded section 11 of bushing 9 will be of a length greater than the threaded section of housing 13, such that it will be possible to obtain a correct clipping or anchoring position of cable sheath 3 with respect to the lock catch actuating mechanism 6. The greater diameter section 10 of the bushing simply serves for fixing the end of cable sheath 3, as has been already indicated.

The process of fixing the cable to the lock assembly could be summarised in the following steps:
1.- The cable assembly is positioned facing bushing 9 and head 8, Figures 2 and 3, in housing 13, Figure 6, and casing 21, Figure 9, respectively.
2.- By means of a slight pressure with the fingers on head 8, the latter is coupled and fixed in casing 21, assuring this position for a perfect tightening.
3.- The cable will be tightened and the threaded portion 11 of bushing 9 will be fixed in housing 13, with cover 15 open. At the time of tightening the cable, terminal 18, joined to the end of cable core 2, for example by means of welding, is inserted in the corresponding housing of head 8, as shown in Figure 8.
4.- Finally, once cable core 2 is positioned, secured with head 8, the threaded section 11 of bushing 9 is positioned in housing 13, with the cover thereof open, selecting the correct position, and then the cover 15 of said housing is closed and pressed upon, such that the metal bushing is secured to the lock catch actuating element.

The main advantage of fixing the cable joining the door handle with the lock is that it does not require a second tightening operation after assembling the cable, further allowing to apply a certain tension of greater precision.

Cable regulation is achieved due to the possibility of positioning bushing 9 with respect to housing 13, thanks to the peripheral threading or ribs which couple and assure the relative position between both components. Depending on the manufacturing tolerances of the cable and on the position of the lock catch cam or actuating mechanism, the threaded section 11 of bushing 9 may always be located in housing 13 in an optimal position, absorbing tolerances, the cable remaining therefore with a slight tension. For a correct assembly, firstly head 8 must always be fixed in casing 21, and then bushing 9 in the lock catch actuating mechanism through the threaded section 11 thereof in the also-threaded housing 14.

## Claims

1. A transmission device between the handle and the lock of a vehicle door, made up of a cable made up of a core (2) and a sheath (3), connected at one end (5) to the handle and at the opposite end (5') to the lock and serving as a transmission means between said handle and the lock catch actuating element (6), **characterised in that** the connection to the lock is carried out by anchoring the end of the sheath (3) to the lock catch actuating element (6) and by anchoring the end of the cable core (2) to a fixed point of the lock, with said core (2) tight, this fixed point being located at a distance from the handle greater than the anchoring point of sheath (3); the anchoring of which between the sheath (3) and the catch actuating element (6) comprises a bushing (9) through which the cable passes with a free-sliding capacity and to which the end of the sheath (3) is fixed, the bushing (9) and the catch actuating element (6) having position-adjustable mutual anchoring means; and the anchoring of which between the cable core (2) and the fixed point on the lock comprises a head (8) which can be fixed to the end of the cable core (2) and a retention casing (21) integrally fixed to the lock, said head (8) and casing (21) having mutual fitting means preventing the head (8) from shifting.

2. A device according to claim 1, **characterised in that** said bushing (9) has two sections of different inner and outer diameter, one of a greater diameter (10), in which the sheath (3) is introduced and fixed, and another of smaller diameter (11) through which the cable core (2) passes freely.

3. A device according to claims 1 and 2, **characterised in that** the anchoring means between the bushing (9) and the catch actuating element (6) consist of an outer peripheral threading or ribbing (12) that the smaller diameter section of the bushing (9) has, and a cylindrical housing (13) of equal diameter formed on the catch actuating element (6) and provided with the same peripheral threading or ribbing, the smaller diameter section (11) of which is coupled and fixed inside the housing in selectable, relative positions.

4. A device according to claim 3, **characterised in that** the smaller diameter section (11) of the bushing (9) is peripheral threaded or ribbed (12) on the outside for a length greater than the threading or ribbing of the cylindrical housing.

5. A device according to claim 3, **characterised in that** the peripherally threaded or ribbed cylindrical housing of the catch actuating element (6) is longitudinally subdivided in two halves, one of the halves (14) of which is shaped by the actuating element (6) itself and the other half (15) is shaped on a cover (16) which can be fixed to said first half (14).

6. A device according to claim 1, **characterised in that** the head (8) which can be fixed to the end of the cable core (2) has a central passage (17) through which the cable core (2) is introduced until projecting in a portion to which a terminal (18) is integrally fixed which serves as a stop against the extraction of said core (2), and has an outer transverse clamp (19) limited between shapings; and **in that** the integral casing (21) of the lock has complementary shapings (20) in which the clamp and shapings of said head (8) are tightly coupled.

## Patentansprüche

1. Übertragungseinheit zwischen dem Griff und dem Schloss einer Fahrzeugtür, bestehend aus einem Kabel, welches aus einem Kern (2) und einer Hülle (3) besteht und an einem Ende (5) mit dem Griff und am gegenüber liegenden Ende (5') mit dem Schloss verbunden ist und als ein Übertragungsmittel zwischen dem Griff und dem die Schlossarretierung betätigenden Element (6) dient, **gekennzeichnet dadurch, dass** die Verbindung zum Schloss durch Verankern des Endes der Hülle (3) an dem die Schlossarretierung betätigenden Element (6) und durch Verankern des Endes des Kabelkerns (2) an einem festen Punkt des Schlosses erfolgt, wobei der Kern (2) straff ist und wobei der feste Punkt mit einem größeren Abstand zum Griff als der Ankerpunkt der Hülle (3) angeordnet ist, wobei die Verankerung des Kabels zwischen der Hülle (3) und dem die Schlossarretierung betätigenden Element (6) eine Hülse (9) umfasst, durch welche das Kabel mit einem freien Gleitvermögen verläuft und an welchem das Ende der Hülle (3) befestigt ist, wobei die Hülse (9) und das die Schlossarretierung betätigende Element (6) beidseitig positionsveränderbare Verankerungsmittel aufweisen, und wobei die Verankerung des Kabels zwischen dem Kabelkern (2) und dem festen Punkt am Schloss einen Kopf (8), der am Ende des Kabelkerns (2) befestigt werden kann, und eine Haltekapsel (21), die am Schloss eingebaut ist, umfasst, wobei der Kopf (8) und die Kapsel (21) beidseitige Verbindungsmittel aufweisen, die die Verschiebung des Kopfes (8) verhindern.

2. Gerät nach Anspruch 1, **gekennzeichnet dadurch, dass** die Hülse (9) zwei Abschnitte mit verschiedenen inneren und äußeren Durchmessern aufweist, einen mit größerem Durchmesser (10), in welchen die Hülle (3) eingesetzt und befestigt ist, und einen weiteren mit kleinerem Durchmesser (11), durch welchen der Kabelkern (2) frei verläuft.

3. Gerät nach Anspruch 1 und 2, **gekennzeichnet dadurch, dass** die Verankerungsmittel zwischen der Hülse (9) und dem die Schlossarretierung betätigenden Element (6) aus einem umlaufend Außengewinde oder einer äußeren Riffelung (12) an dem Abschnitt mit kleinerem Durchmesser der Hülse (9) und einem zylindrischen Gehäuse (13) gleichen Durchmessers bestehen, das am die Schlossarretierung betätigenden Element (6) gebildet und mit dem gleichen umlaufenden Gewinde oder der Riffelung ausgestattet ist, wobei der Abschnitt mit kleinerem Durchmesser (11) im Inneren des Gehäuses in wählbarer, relativer Stellung verbunden und befestigt ist.

4. Gerät nach Anspruch 3, **gekennzeichnet dadurch, dass** der Abschnitt mit kleinerem Durchmesser (11) der Hülse (9) über eine Länge äußerlich umlaufend mit Gewinde versehen oder geriffelt (12) ist, die größer ist als das Gewinde oder die Riffelung des zylindrischen Gehäuses.

5. Gerät nach Anspruch 3, **gekennzeichnet dadurch, dass** das umlaufend mit Gewinde versehene oder geriffelte zylindrische Gehäuse des die Schlossarretierung betätigenden Elements (6) längs in zwei Hälften unterteilt ist, wobei eine der Hälften (14) durch das betätigende Element (6) selbst gebildet ist und die andere Hälfte (15) an einer Abdeckhaube (16) gebildet ist, welche an der ersten Hälfte (14) befestigt werden kann.

6. Gerät nach Anspruch 1, **gekennzeichnet dadurch, dass** der Kopf (8), welcher am Ende des Kabelkerns (2) befestigt werden kann, einen mittleren Durchgang (17) aufweist, durch welchen der Kabelkern (2) eingeführt ist, bis er in einen Abschnitt hineinragt, in welchem ein Anschlusselement (18) eingebaut ist, welches das Herausziehen des Kerns (2) verhindert und eine äußere Querklammer (19) aufweist, die zwischen Formungen begrenzt ist, und dass die eingebaute Haltekapsel (21) des Schlosses komplementäre Formungen (20)aufweist, in welchen die Klammer und die Formungen des Kopfes (8) fest verbunden sind.

## Revendications

1. Dispositif de transmission entre la poignée et la serrure d'une portière de véhicule, composé d'un câble composé d'une âme (2) et d'une gaine (3), raccordé au niveau d'une extrémité (5) à la poignée et au niveau de l'extrémité opposée (5') à la serrure et servant de moyen de transmission entre ladite poignée et l'élément d'actionnement de taquet (6), **caractérisé en ce que** le raccordement à la serrure est réalisé en attachant l'extrémité de la gaine (3) à l'élément d'actionnement de taquet (6) et en attachant l'extrémité de l'âme de câble (2) à un point fixe de la serrure, avec ladite âme (2) serrée, ce point fixe étant situé à une distance de la poignée supérieure au point d'attache de la gaine (3) ; dont la fixation entre la gaine (3) et l'élément d'actionnement de taquet (6) comprend une douille (9) à travers laquelle le câble passe avec une capacité de coulissement libre et à laquelle l'extrémité de la gaine (3) est fixée, la douille (9) et l'élément d'actionnement de taquet (6) comportant des moyens d'attache mutuels à position ajustable ; et dont l'attache entre l'âme de câble (2) et le point fixe sur la serrure comprend une tête (8) qui peut être fixée à l'extrémité de l'âme de câble (2) et un carter de rétention (21) fixé d'un seul tenant à la serrure, ladite tête (8) et ledit carter (21) comportant des moyens de fixation mutuels empêchant la tête (8) de se déplacer.

2. Dispositif selon la revendication 1, **caractérisé en ce que** ladite douille (9) comporte deux sections de diamètres interne et externe différents, une d'un diamètre supérieur (10), dans laquelle la gaine (3) est introduite et fixée, et une autre de diamètre inférieur (11) à travers laquelle l'âme de câble (2) passe librement.

3. Dispositif selon les revendications 1 et 2, **caractérisé en ce que** les moyens d'attache entre la douille (9) et le moyen d'actionnement de taquet (6) sont constitués d'un filetage ou d'un nervurage périphérique externe (12) que la section de diamètre inférieur de la douille (9) comporte, et un boîtier cylindrique (13) de diamètre égal formé sur l'élément d'actionnement de taquet (6) et muni du même filetage ou nervurage périphérique, dont la section de diamètre inférieur (11) est couplée et fixée à l'intérieur du boîtier dans des positions relatives pouvant être sélectionnées.

4. Dispositif selon la revendication 3, **caractérisé en ce que** la section de diamètre inférieur (11) de la douille (9) est filetée ou nervurée de manière périphérique (12) sur l'extérieur pour une longueur supérieure au filetage ou au nervurage du boîtier cylindrique.

5. Dispositif selon la revendication 3, **caractérisé en ce que** le boîtier cylindrique fileté ou nervuré de l'élément d'actionnement de taquet (6) est subdivisé de manière longitudinale en deux moitiés, dont une des moitiés (14) est formée par l'élément d'actionnement (6) lui-même et l'autre moitié (15) est formée sur un couvercle (16) qui peut être fixé à ladite première moitié (14).

6. Dispositif selon la revendication 1, **caractérisé en ce que** la tête (8) qui peut être fixée à l'extrémité de l'âme de câble (2) comporte un passage central (17) à travers lequel l'âme de câble (2) est introduite jusqu'à se projeter dans une partie à laquelle une borne (18) est fixée d'un seul tenant qui sert de butée contre l'extraction de ladite âme (2), et comporte une bride transversale extérieure (19) limitée entre des profilages ; et **en ce que** le carter monobloc (21) de la serrure comporte des profilages complémentaires (20) dans lesquels la bride et les profilages de ladite tête (8) sont couplés de manière serrée.
